# EUROPEAN PATENT SPECIFICATION

(11) **EP 1 966 068 B1**
(45) Date of publication and mention of the grant of the patent: **29.04.2009**
(21) Application number: 06828091.6
(22) Date of filing: 18.12.2006
(51) Int. Cl.: B65G 39/09, F16C 13/02

(54) **ROLLER**
ROLLE
ROULEAU

(30) Priority: 19.12.2005 BG 10938405
(43) Date of publication of application: 10.09.2008
(73) Proprietor: Mirchev, Dimitar Nikolov, 4300 Karlovo (BG); Mirchev, Nikolay Dimitrov, 1408 Sofia (BG); Mircheva, Krasimira Dimitrova, 1408 Sofia (BG)
(72) Inventor: Mirchev, Dimitar Nikolov, 4300 Karlovo (BG); Mirchev, Nikolay Dimitrov, 1408 Sofia (BG); Mircheva, Krasimira Dimitrova, 1408 Sofia (BG)
(74) Representative: Benatov, Emil Gabriel
(86) International application number: PCT/BG2006/000021
(87) International publication number: WO 2007/070992

(56) References cited:
- DE-C- 570 216
- DE-C- 948 404
- FR-A- 2 175 477
- US-A- 2 557 418
- US-A- 5 381 887
- US-B2- 6 516 942

## Description

### FIELD OF APPLICATION

The invention relates to a roller applicable into devices for continuous transportation, in particular for belt and roller conveyors.

### PREVIOUS STATE OF THE ART

It is known a roller [US6516942 B2], which is closed on all sides, with a respective fixed axle running through each of the faces of said roller, a bearing being fixed to said axle by means of its inner ring being immobile with respect to the axle, the outer ring of said bearing being fixed to a bearing housing being blindly closed on its internal side, said bearing housing extending into a face cap connected to the cylindrical body of said roller. Labyrinth seals against moisture penetration are located between the external face of said bearing and the environment.

A roller is also known from DE 948 404 C.

Said roller is of limited applicability and effectiveness for in case of unfavorable weather conditions with precipitations it features a low degree of projection against penetrating moisture, due to the fact that labyrinth seals age with time and start allowing the passage of precipitation moisture from the environment. This is particularly impeding when the roller is used for the lateral boards of transportation belts and in inclined position, which additionally increases the vulnerability of that roller face which is in the upper position.

The objective of the invention consists in creating a roller of extended application opportunities and increased moisture resistance and effectiveness.

### TECHNICAL ESSENCE OF THE INVENTION

Said objective is attained by creating a roller which consists of a cylindrical body. A respective immobile axle runs through each of the faces of said roller. A respective bearing is fixed in a standard way at each of the roller ends, the outer ring of said bearing being fixed to a respective bearing housing. Respective labyrinth seals for each bearing are intended for protection against moisture penetration. Said bearing housing is a passage one. Every immobile axle goes into a cap connected to the external end of the respective bearing housing. In said cylindrical body there are at least two uniformly situated groups, each of said groups having at least two uniformly situated spokes, the external ends of said spokes being welded to the internal surface of the cylindrical body, and their internal ends passing into a flange, a mobile axle being welded centrally to said flange, and the ends of said axle being connected rigidly to the respective inner rings of the bearings. The labyrinth seals are located on the internal side between the bearing housing and the mobile axle.

In an embodiment of the roller for operation in inclined position, there is a tubular bushing welded to the lowest flange on the side of the lower bearing, said bushing forming together with the flange 8 a protective casing around the upper part of the lower bearing housing.

In another embodiment of the roller for operation in inclined position, the lower bearing housing is connected to the mobile axle and to additionally welded spokes, and the lower immobile axle has a stop at its internal end and an extension, the inner ring of the lower bearing being connected rigidly to said extension. The labyrinth seals are located on the lower side of the lower bearing between the lower immobile axle and the internal surface of the lower bearing housing and fixed by means of a cap with a circlip.

It is possible that the mobile axle be hollow, the ends of said axle being bearing housings for their respective bearings, and the immobile axles being extended into said bearing housings. The labyrinth seals are located on the lower side of the lower bearing between the caps and the mobile axle. The closed space in the mobile axle is filled with a lubricating liquid. In the internal end of each extension of immobile axles there is a stop circlip, each outer bearing ring is fixed to the axle with an internal circlip, and each outer face of the bearings is fixed by means of a locking circlip 19.

It is possible that the lubricating liquid in the roller with a hollow mobile axle be of high viscosity.

It is possible that the roller have a cylindrical body evenly perforated with openings.

It is possible that in the roller the mobile axle be connected to the cylindrical body with single spokes at equal distances from each other, every next spoke being shifted to a certain angle with respect to the preceding one, as a result of which said spokes form a helical line.

It is possible that in the roller the diameter of flanges be greater than the outer diameter of caps.

An advantage of the roller is that said roller is of extended application opportunities and increased moisture resistance and effectiveness.

### DESCRIPTION OF ACCOMPANYING FIGURES

The invention is explained in more details with the aid of an exemplary embodiment of a roller, shown in the accompanying figures, where:
- Fig. 1 is a longitudinal section of a first variant of a roller operating in horizontal position;
- Figs. 2a and 2b are respectively a front and side views of three spokes with the flange and the tubular bushing;
- Figs. 3a and 3b are front views for a flange with two or three spokes, respectively;
- Fig, 4 is a longitudinal section of a first variant of a roller operating in inclined position.
- Fig, 5 is a longitudinal section of a second variant of a roller operating in inclined position.
- Fig. 6 is a partial longitudinal section of a second variant of a roller operating in horizontal position with a hollow rotating axle and perforation of the cylindrical body.

### PREFERRED EMBODIMENT AND FUNCTIONING OF THE INVENTION

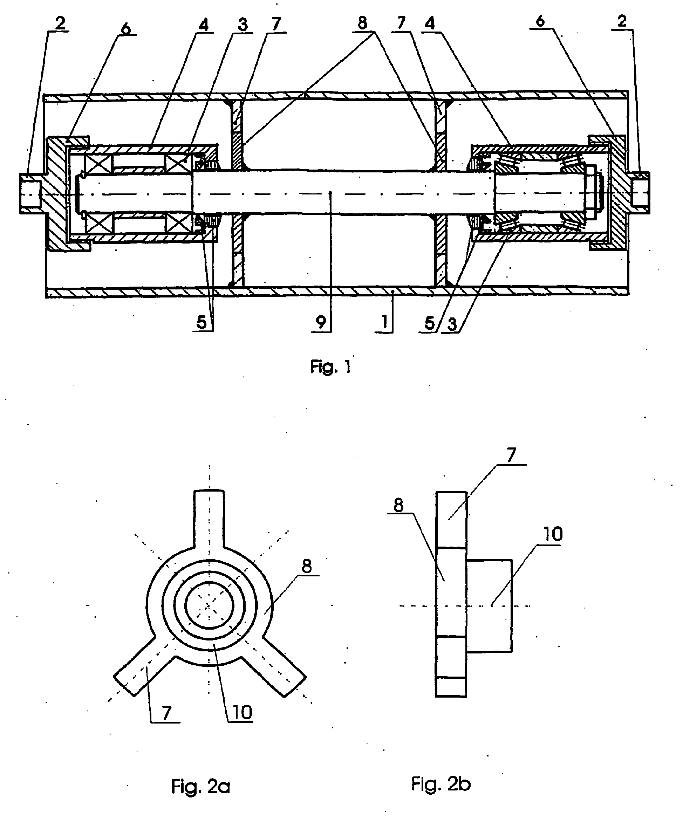

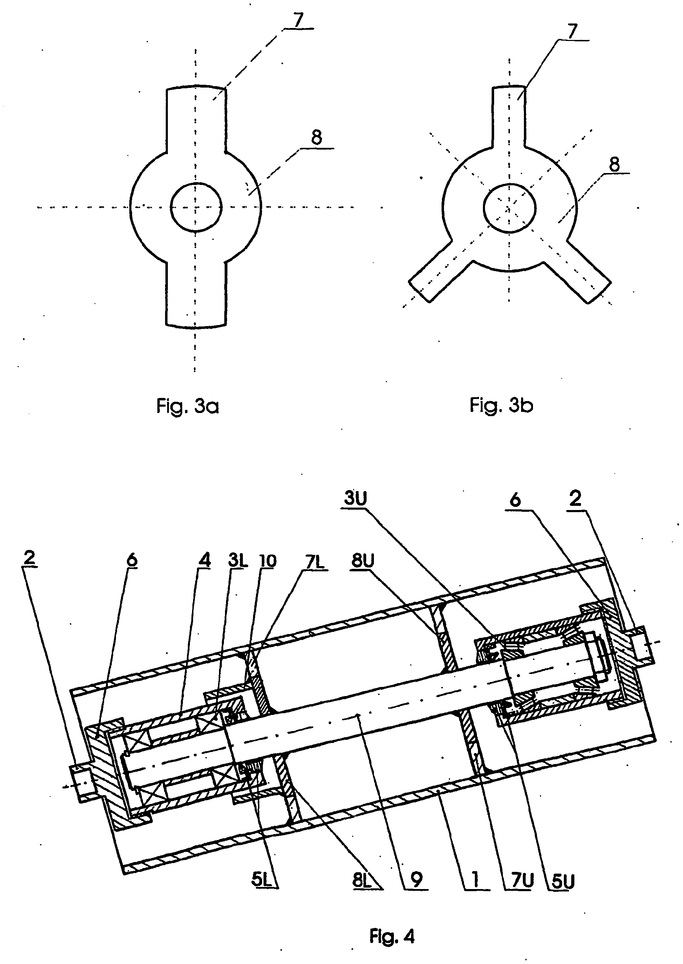

The roller (Fig. 1) consists of a cylindrical body 1. A respective immobile axle 2 runs through each of the faces of said roller. A respective bearing 3 is fixed in a standard way at each of the roller ends, the outer ring of said bearing being fixed to a respective bearing housing 4. Respective labyrinth seals 5 for each bearing 3 are intended for protection against moisture penetration. Said bearing housing 4 is a passage one. Every immobile axle 2 goes into a cap 6 connected to the external end of the respective bearing housing 4. In said cylindrical body 1 there are at least two uniformly situated groups of at least two uniformly situated spokes 7 (Fig. 3), the external ends of said spokes being welded to the internal surface of the cylindrical body 1, and their internal ends passing into a flange 8 (Fig. 2), a mobile axle 9 being welded centrally to said flange, and the ends of said axle being connected rigidly to the respective inner rings of bearings 3. The labyrinth seals 5 are located on the internal side between the bearing housing 4 and the mobile axle 9.

In an embodiment of the roller for operation in inclined position (Fig. 4), there is a tubular bushing 10 welded to the lowest flange 8L on the side of the lower bearing 3L, said bushing forming together with the flange 8 a protective casing around the upper part of the lower bearing housing 4.

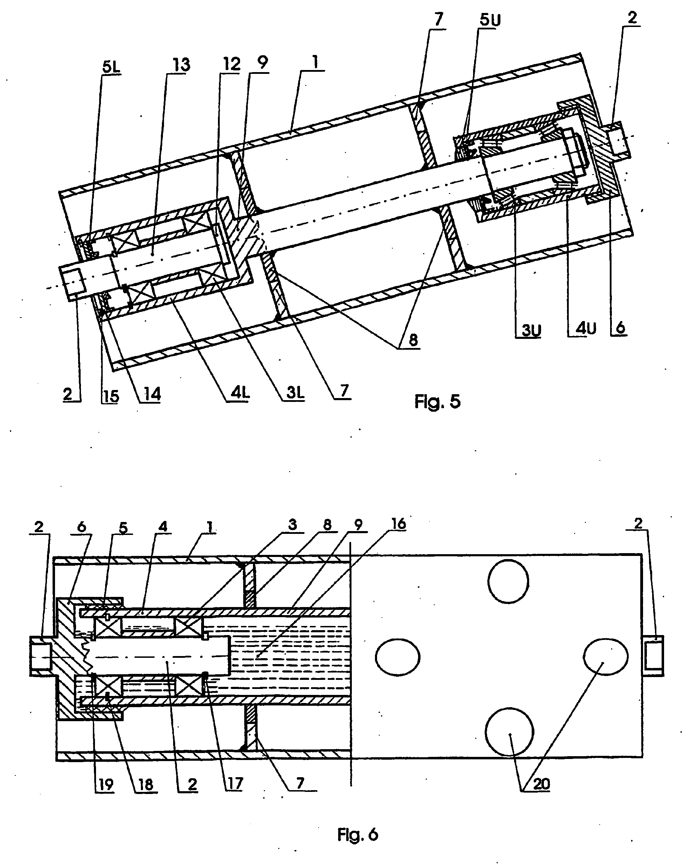

In another embodiment of the roller for operation in inclined position (Fig. 5) the lower bearing housing 4L is connected to the mobile axle 9 and to additionally welded spokes 11, and the lower immobile axle (2L) has a stop 12 at its internal end and an extension 13, the inner ring of the lower bearing 3L being connected rigidly to said extension. The labyrinth seals 5 are located on the lower side of the lower bearing 3L between the lower immobile axle 2L and the internal surface of the lower bearing housing 4L and fixed by means of a cap 14 with a circlip 15.

It is possible that the mobile axle 9 be hollow (Fig. 6), the ends of said axle being bearing housings for their respective bearings 3, and the axles 2 being extended into said bearing housings. The labyrinth seals 5 are located between the caps 6 and the axle 9. The closed space 16 in the axle 9 is filled with a lubricating liquid. In the internal end of each extension of axles 2 there is a stop circlip 17, each outer ring of the bearings 3 is fixed to the axle 9 with an internal circlip 18, and each outer face of the bearings 3 is fixed by means of a locking circlip 19.

It is possible that the lubricating liquid in the roller with a hollow axle 9 be of high viscosity.

It is possible that the roller have a cylindrical body 1 evenly perforated with openings 20.

It is possible that in the roller the axle 9 be connected to the cylindrical body 1 with single spokes 7 at equal distances from each other, every next spoke 7 being shifted to a certain angle with respect to the preceding one, as a result of which the spokes 7 form a helical line.

It is possible that in the roller the diameter of flanges 8 be greater than the outer diameter of caps 6.

Various types of bearings are shown in each roller in Figs. 1, 3 and 4, through which it is indicated that the roller design is not influenced by the bearing type.

The roller functions as follows:
The embodiment of the roller for operation in horizontal position (Fig. 1) realizes the protection against moisture penetration in the following manner. The presence of caps 6, which together with bearing housings 4 and labyrinth seals 5 provide a moisture-inaccessible chamber for every bearing 3, prevents the falling precipitations from affecting the bearings 3. On the other hand, under the effect of centrifugal forces, the precipitations, dust and all kinds of semi-liquid fractions fallen into the gap of the cylindrical body drain away over the internal surface of the cylindrical surface 1, having not any opportunity of accessing the bearings 3. When the cylindrical body 1 is perforated with the openings 20 (Fig. 6), this enhances additionally the effect of draining away for the liquid, dust-like and semi-liquid pollutants that have penetrated into the gap. Flanges 8 help additionally the drainage of pollutants, preventing them from leaking to the voids of bearing housings 4. When the diameter of flanges 8 is greater than the outer diameter of caps 6 (Figs. 3 and 4), the flanges 8 provide additional guidance of draining pollutants directly above the enveloping surface of caps 6.

The number of spokes 7 depends on the size of the cylindrical body and its load-bearing capacity.

When the spokes are arranged in the form of a helical line (not shown in the figures), this ensures additional turbulence for the draining pollutants.

The first variant of the roller for operation in inclined position (Fig. 4) provides protection against moisture penetration in the following manner. The protection of the upper bearing 3U is the same as that of the bearings in the horizontal variant. To avoid the penetration of pollutants into the lower bearing 3L, mostly through the labyrinth seals 5L, the casing around the upper part of the lower bearing housing 4L, formed by the tubular bushing 10 and flange 8L, additionally deviates all pollutants flowing downwards under the effect of the gravitation.

The second variant of the roller for operation in inclined position (Fig. 5) provides protection against moisture penetration in the following manner. The protection of the upper bearing 3U is the same as that of the bearings in the horizontal variant. The modified bearing housing 4L prevents completely the penetration of pollutants into the lower bearing 3L and provides total protection of the lower bearing 3L. Additionally, the lower bearing 3L is protected from below by the labyrinth seals 5L, which, in their turn, are protected by the cap 14.

The variant with a hollow axle 1 is convenient both for a horizontal roller (Fig. 6) and for inclined rollers (not shown in the figures). In this case the closed space 16 ensures improved operation conditions for the bearings 16, enhancing in such a way their durability. When the space 16 is filled with a lubricating liquid of high viscosity, e. g. with special grease in accordance with the load and type or bearings 3, said grease cannot leave said space 16 even when the labyrinth seals 5 start ageing after having been used for a long time.

## Claims

1. A roller with a cylindrical body (1), wherein a respective immobile axle (2) runs through each of the faces of said roller, a respective bearing (3) being fixed in a standard way at each of the ends of said roller, the outer ring of said bearing being fixed to a respective bearing housing (4), and respective labyrinth seals (5) for each bearing (3) being intended for protection against moisture penetration, respective flanges (8) being located at a certain distance in the cylindrical body (1), two mobile axles (9) being welded centrally to their respective flanges (8), and the other ends of the mobile axles (9) being rigidly fixed to the respective internal rings of their respective bearings (3), and the labyrinth seals (5) being located on the internal side between the bearing housing (4) and mobile axles (9), **characterized in that** said flanges (8) are of diameter smaller than the internal diameter of the cylindrical body (1), the bearing housings (4) are passage ones, wherein for a roller that operates mainly in horizontal position each immobile axle (2) goes into a cap (6) connected to the external end of the respective bearing housing (4), at least two groups being uniformly located in the cylindrical body (1), each of said groups having at least two uniformly located spokes (7), wherein the external ends of said spokes being welded to the internal surface of said cylindrical body (1), and their internal ends passing into respective flanges (8), and the distance at which said flanges (8) are situated inside said cylindrical body (1) being bigger than the length of their respective bearing housings (4), which does not worsen the mechanical structure of the roller as regards the loading and its dynamic stability.

2. A roller according to Claim 1, **characterized in that** for operation in inclined position there is a tubular bushing (10) welded to the lowest flange (8L) on the side of the lower bearing (3L), said bushing forming together with the flange (8L) a protective casing around the upper part of the lower bearing housing (4L).

3. A roller according to Claim 1, **characterized in that** for operation in inclined position the lower bearing housing (4L) is connected to the mobile axle (9) and to additionally welded spokes (11), and the lower immobile axle (2L) has a stop (12) at its internal end and an extension (13), the inner ring of the lower bearing (3L) being connected rigidly to said extension, and the labyrinth seals (5L) being located on the lower side of the lower bearing (3L) between the lower immobile axle (2L) and the internal surface of the lower bearing housing (4L) and fixed by means of a cap (14) with a circlip (15).

4. A roller according to Claims 1 to 3, **characterized in that** the axle (9) is hollow and the ends of said axle are bearing housings for their respective bearings (3), and the axles (2) are extended into said bearing housings, the labyrinth seals (5) being located between the caps (6) and the axle (9), and the closed space (16) in said axle (9) being filled with a lubricating liquid, whereupon in the internal end of each extension of said axles (2) there is a stop circlip (17), and each outer ring of said bearings (3) is fixed to the axle (9) with an internal circlip (18), each outer face of said bearings (3) being fixed by means of a locking circlip (19).

5. A roller according to Claim 4, **characterized in that** said lubricating liquid is of high viscosity.

6. A roller according to Claims 1 to 4, **characterized in that** said cylindrical body (1) is evenly perforated with openings (20),

7. A roller according to Claims 1 to 4, **characterized in that** the axle (9) is connected to the cylindrical body (1) with single spokes (7) at equal distances from each other, every next spoke (7) being shifted to a certain angle with respect to the preceding one, whereupon the spokes (7) form a helical line

8. A roller according to Claims 1 to 4, **characterized in that** the diameter of flanges (8) is greater than the outer diameter of caps (6).

## Patentansprüche

1. Rolle mit zylindrischem Körper (1), in dem eine respective ruhende Achse (2) durch jede der Stirnflächen von der erwähnten Rolle durchgeht, wobei ein respectives Lager (3) auf typische Weise an jedem der Enden von der erwähnten Rolle fixiert ist, der Außenring des erwähnten Lagers an dem respectiven Lagerkörper (4) fixiert ist, und respective Labyrintdichtungen (5) für jedes Lager (3) zum Schützen gegen die Eindringung von Feuchtigkeit vorgesehen sind, die respectiven Flanschen (8) auf einem gewissen Abstand in dem zylindrischen Körper (1) angeordnet sind, zwei bewegliche Achsen (9) in zentraler Stellung an ihren respectiven Flanschen (8) geschweißt sind, und die anderen Enden der beweglichen Achsen (9) steif auf den respectiven Außenringen ihrer respectiven Lager (3) fixiert sind, und die Labyrintdichtungen (5) auf der Innenseite zwischen dem Lagerkörper (4) und den beweglichen Achsen (9) angeordnet sind, **dadurch gekennzeichnet, dass** die erwähnten Flanschen (8) einen Durchmesser aufweisen, der kleiner als der Innendurchmesser des zylindrischen Körpers (1) ist, die Lagerkörper (4) mit einem Durchgang ausgerüstet sind, durch den, für eine Rolle, die hauptsächlich in horizontaler Stellung funktioniert, jede ruhende Achse (2) in eine Kappe (6) geht, die am Außenende des respectiven Lagerkörpers (4) verbunden ist, mindestens zwei Gruppen gleichmäßig in dem zylindrischen Körper (1) angeordnet sind, jede der erwähnten Gruppen mindestens zwei gleichmäßig angeordnete Speichen (7) aufweist, wobei die Außenenden der erwähnten Speichen auf der Innenoberfläche des erwähnten zylindrischen Körpers (1) geschweißt sind, und ihre Innenenden zu den respectiven Flanschen (8) übergehen, und der Abstand, auf dem die erwähnten Flanschen (8) in dem erwähnten zylindrischen Körper (1) angeordnet sind, größer als die Länge ihrer respectiven Lagerkörper (4), was die mechanische Struktur der Rolle hinsichtlich der Belastung und seiner dynamischen Stabilität nicht verschlechtert.

2. Rolle gemäß Anspruch 1, **dadurch gekennzeichnet, dass** es für die Funktionierung in Schräglage eine rohrförmige Buchse (10) gibt, die an dem untersten Flanschen (8L) auf der Seite des unteren Lagers (3L) geschweißt ist, wobei diese Buchse mit dem Flanschen (8L) ein Schutzgehäuse um den oberen Teil des unteren Lagerkörpers (4L) herum bildet.

3. Rolle gemäß Anspruch 1, **dadurch gekennzeichnet, dass** für die Funktionierung in Schräglage der untere Lagerkörper (4L) mit der beweglichen Achse (9) und den zusätzlich geschweißten Speichen (11) verbunden ist, und die untere ruhende Achse (2L) einen Hubbegrenzer (12) auf ihrem Innenende und eine Verlängerung (13) aufweist, wobei der Innenring des unreren Lagers (3L) an der erwähnten Verlängerung steif verbunden ist, und die Labyrintdichtungen (5L) auf der unteren Seite des unteren Lagers (3L) zwischen der unteren ruhenden Achse (2L) und der Innenoberfläche des unteren Lagerköroers (4L) angeordnet und durch eine Kappe (14) mit einem Federring (15) fixiert sind.

4. Rolle gemäß Ansprüchen 1 bis 3, **dadurch gekennzeichnet, dass** die Achse (9) hohl ist und die Enden der erwähnten Achse Lagerkörper für ihre respectiven Lager (3) sind, und die Achsen (2) sich in den erwähnten Lagerkörpern erstrecken, die Labyrintdichtungen (5) zwischen den Kappen (6) und der Achse (9) angeordnet sind, und der geschlossene Raum (16) in der erwähnten Achse (9) mit einer Schmierflüssigkeit gefüllt ist, wobei es auf dem Innenende jeder Verlängerung von den erwähnten Achsen (2) einen Anhaltefederring (17) gibt, und jeder Innenring der erwähnten Lager (3) mittels eines Innenfederrings (18) auf der Achse (9) fixiert ist, wobei jede Außenstirnfläche der erwähnten Lager (3) durch einen Feststellfederring (19) fixiert ist.

5. Rolle gemäß Anspruch 4, **dadurch gekennzeichnet, dass** die erwähnte Schmierflüssigkeit eine hohe Viscosität aufweist.

6. Rolle gemäß Ansprüchen 1 bis 4, **dadurch gekennzeichnet, dass** der erwähnte zylindrische Körper (1) mit Öffnungen (20) gleichmäßig perforiert ist.

7. Rolle gemäß Ansprüchen 1 bis 4, **dadurch gekennzeichnet, dass** die Achse (9) zu dem zylindrischen Körper (1) durch einzelne Speichen (7) in gleichen Abständen voneinander verbunden ist, wobei jede nächste Speiche (7) auf einem gewissen Winkel hinsichtlich der vohergehenden Speiche verschoben ist, wodurch die Speichen (7) eine Spirallinie bilden.

8. Rolle gemäß Ansprüchen 1 bis 4, **dadurch gekennzeichnet, dass** der Durchmesser der Flanschen (8) größer als der Außendurchmesser der Kappen (6) ist.

## Revendications

1. Rouleau à corps cylindrique (1), dans lequel un essieu fixe respectif (2) passe à travers chacune des faces frontales dudit rouleau, un roulement respectif (3) étant fixé d'une manière standard à chacun des bouts dudit rouleau, l'anneau extérieur dudit roulement étant fixé au corps de roulement respectif (4), et des joints labyrinthes respectifs (5) pour chaque roulement (3) étant prévus pour la protection contre la pénétration d'humidité, des brides respectives (8) étant disposées à une certaine distance dans le corps cylindrique (1), deux essieux mobiles (9) étant soudés en position centrale à leurs brides respectives (8), et les autres bouts des essieux mobiles (9) étant fixés rigidement aux anneaux extérieurs respectifs de leurs roulements respectifs (3), et les joints labyrinthes (5) étant disposés sur le côté intérieur entre le corps de roulement (4) et les essieux mobiles (9), **caractérisé en ce que** lesdites brides (8) sont d'un diamètre qui est inférieur au diamètre intérieur du corps cylindrique (1), les corps de roulement (4) sont munis de passage, où, pour un rouleau qui fonctionne principalement en position horizontale, chaque essieu fixe (2) entre dans un capuchon (6) qui est lié au bout extérieur du corps de roulement respectif (4), au moins deux groupes étant uniformement disposés dans le corps cylindrique (1), chacun desdits groupes ayant au moins deux rayons (7) disposés uniformement, où les bouts extérieurs desdits rayons étant soudés à la surface intérieure dudit corps cylindrique (1), et leurs bouts intérieurs passant dans les brides respectifs (8), et la distance à laquelle lesdits brides (8) sont disposés dans ledit corps cylindrique (1) étant supérieure à la longueur de leurs corps de roulement respectifs (4), ce qui ne détériore pas la structure mécanique du rouleau en ce qui concerne le chargement et sa stabilité dynamique.

2. Rouleau selon la revendication 1, **caractérisé en ce que** pour le fonctionnement en position inclinée il y a un manchon tubulaire (10) soudé au bride le plus inférieur (8L) du côté du roulement inférieur (3L), ce manchon formant avec le bride (8L) un capot de protection autour de la partie supérieure du corps de roulement inférieur (4L).

3. Rouleau selon la revendication 1, **caractérisé en ce que** pour le fonctionnement en position inclinée le corps de roulement inférieur (4L) est lié à l'essieu mobile (9) et aux rayons soudés supplémentairement (11), et l'essieu fixe inférieur (2L) est muni d'un arrêtoir (12) sur son bout intérieur et d'un allongement (13), l'anneau intérieur du roulement inférieur (3L) étant lié rigidement audit allongement, et les joints labyrinthes (5L) étant disposés sur le côté inférieur du roulement inférieur (3L) entre l'essieu fixe inférieur (2L) et la surface intérieure du corps de roulement inférieur (4L) et fixés au moyen d'un capuchon (14) à anneau élastique (15).

4. Rouleau selon les revendications 1 à 3, **caractérisé en ce que** l'essieu (9) est creux et les bouts dudit essieu sont des corps de roulement pour leurs roulements respectifs (3), et les essieux (2) s'étendent dans lesdits corps de roulement, les joints labyrinthes (5) étant disposés entre les capuchons (6) et l'essieu (9), et l'espace clos (16) dans ledit essieu (9) est rempli d'un liquide lubrifiant, et en même temps, au bout intérieur de chaque allongement desdits essieux (2) il y a un anneau élastique d'arrêt (17), et chaque anneau extérieur desdits roulements (3) est fixé à l'essieu (9) à l'aide d'un anneau élastique intérieur (18), chaque face extérieure desdits roulements (3) étant fixée au moyen d'un anneau élastique de serrage (19).

5. Rouleau selon la revendication 4, **caractérisé en ce que** ledit liquide lubrifiant est d'une viscosité élevée.

6. Rouleau selon les revendications 1 à 4, **caractérisé en ce que** ledit corps cylindrique (1) est uniformement perforé avec des ouvertures (20).

7. Rouleau selon les revendications 1 à 4, **caractérisé en ce que** l'essieu (9) est lié au corps cylindrique (1) au moyen de rayons individuels (7) à des distances égales l'un de l'autre, chaque rayon suivant (7) étant déplacé à un certain angle par rapport au rayon précédant, par suite de quoi les rayons (7) forment une ligne en hélice.

8. Rouleau selon les revendications 1 à 4, **caractérisé en ce que** le diamètre des brides (8) est plus grand que le diamètre extérieur des capuchons (6).
